Europäisches Patentamt

European Patent Office

Office européen des brevets

(11) Publication number: **0 115 164**
**B1**

(12) **EUROPEAN PATENT SPECIFICATION**

(45) Date of publication of patent specification: **13.08.86**

(21) Application number: **83307787.8**

(22) Date of filing: **21.12.83**

(51) Int. Cl.⁴: **B 67 D 3/04, F 16 K 21/00**

(54) Improvements in or relating to valves.

(30) Priority: **21.12.82 GB 8236225**

(43) Date of publication of application:
**08.08.84 Bulletin 84/32**

(45) Publication of the grant of the patent:
**13.08.86 Bulletin 86/33**

(84) Designated Contracting States:
**AT BE CH DE FR GB IT LI LU NL SE**

(56) References cited:
**DE-B-1 164 175**
**DE-C- 693 636**
**US-A-4 193 524**

(73) Proprietor: **G.S. PACKAGING LIMITED**
**11 Great Marlborough Street**
**London W1 (GB)**

(72) Inventor: **Burke, Ronald Patrick**
**Lixwm Post Office**
**Lixwm Near Holywell Clwyd North Wales (GB)**

(74) Representative: **McCall, John Douglas et al**
**W.P. THOMPSON & CO. Coopers Building**
**Church Street**
**Liverpool L1 3AB (GB)**

Courier Press, Leamington Spa, England.

## Description

The present invention relates to a valve.

When valves are employed in liquid dispensing units, and especially in the dispensing of liquids which deteriorate in the presence of oxygen, it is essential that the oxygen permeation into the unit, by way of the valve or otherwise is kept to a minimum. This is critical where the valve forms part of a dispensing mechanism for beverages such as beer and more especially wine. Where the wine is to be stored in a bag a recent development in wine storage and dispensing, a valve is employed. Valves currently available have been unable to meet the strict requirements for oxygen permeation.

The present invention aims to provide a valve mechanism which solves the above mentioned problem of oxygen permeation.

According to the present invention there is provided a valve assembly comprising a valve body having a respective inlet and outlet, a valve member moveable within the valve body and co-operable with valve seat means for closing off the outlet, catch means operable between the valve body and valve member to locate the valve member in a position in which the outlet is closed off, and guide means disposed between the valve body and valve member to guide the valve member for axial movement within the valve body.

Preferably the catch means comprises a circumferential recess or shoulder formed in one of the valve body and valve member, with which a complimentary shaped circumferential rib, formed on the other of the valve body and valve member, co-operates in the closed position of the valve member. More preferably the circumferential recess or shoulder is formed in the valve body and the rib is formed on the valve member.

In one embodiment the valve member has a tapered valve face which co-operates with a complimentary shaped tapered valve seat in the valve body. The valve member also carries an O-ring which is received sealingly in a bore in the valve body. In the closed position the O-ring preferably co-operates with a tapered portion in the valve body. The inlet to the valve body is located between the tapered valve seat and the tapered portion in the valve body. The tapered portion effectively serves as a second valve seat spaced from the first valve seat, but the provision of the O-ring which co-operates with the valve body ensures that a satisfactory seal is provided at all times irrespective of any tolerance variations in the distances between the two valve seats.

In one embodiment the valve member carries two axially spaced apart valve faces which co-operate with respective valve seats formed in the valve body. In the closed position both valves formed by the respective faces and seats are closed. The valves employ complementary tapered faces and seats. The inlet is preferably located between the two valve seats. The catch means is preferably disposed downstream of the outlet valve.

The guide means preferably comprises two diametrically opposite grooves formed in the valve body and aligned in the direction of the axis of the valve member. The valve member carries two axially directed ribs which are received in a respective one of the grooves. The guide means serves to prevent rotation of the valve member and so ensure that the valve member moves axially when actuated.

The valve is actuated by a rotatable cap member, rotation of which causes the valve member to be displaced axially. Helical thread means being provided between the cap member and valve member to convey movement of the cap member to the valve member. Conveniently the cap member has a two start helical thread formed in an internal bore thereof, and the valve member is provided with two diametrically opposed projections which co-operate with a respective one of the helical threads.

A circumferential rib is provided on the valve body and thus co-operates with a recess formed in the cap member to locate the cap member axially with respect to the valve body.

In either embodiment an O-ring seal may be disposed between the end of the valve body and the cap member.

The present invention will now be further described, by way of example only, with reference to the accompanying drawings, in which:—

Figure 1 is a sectional view of one embodiment of a valve in accordance with the invention; and

Figure 2 is a sectional view of a second embodiment of a valve in accordance with the invention.

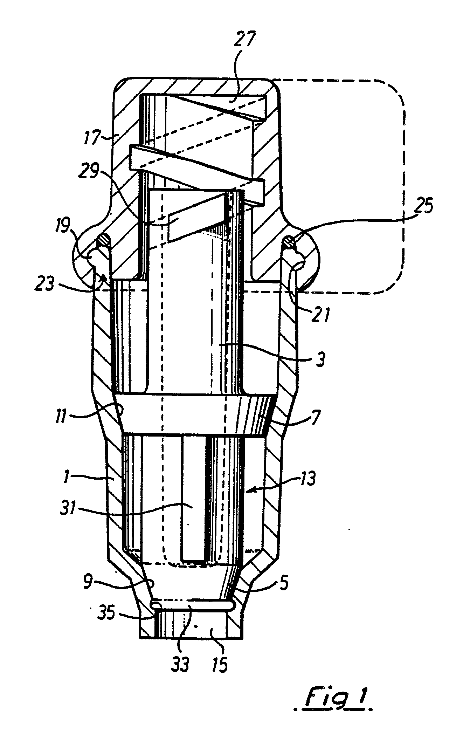

Referring first to Figure 1 the valve assembly comprises a valve body 1, having located moveably therein a valve member 3 which carries two valve faces 5 and 7. The face 5 is co-operable with a valve seat 9 formed in the valve body and the face 7 is co-operable with a valve seat 11 also formed in the valve body thus forming a double valve arrangement. Both valves are sealed off when the valve is in its closed position. An inlet (not illustrated) feeds into a chamber 13 disposed between the two valves, whilst the outlet is at 15 downstream of the valve 5/9.

A cap member 17 is carried rotatably by the valve body and is located axially with respect thereto by a projection 19 disposed at the upper end of the valve body which co-operates with a recess 21. Each of the projection 19 and recess 21 is preferably a continuous circumferential rib and groove. The upper end of the valve body is received in an annular slot 23 in the cap member in which the recess 21 is formed. The resilience of the material enables the two parts to be snap fitted together. An O-ring 25 is disposed in the slot 23 and serves to seal the interior of the valve body from the exterior.

The cap member 17 is formed with a helical groove 27 which is preferably a two start helix (only one is illustrated). The valve member is provided with a projection or projections 29 which co-operate with the groove or grooves 27. Thus, rotation of the cap member causes the valve member to be displaced in a direction to open or close the valve.

The valve member is guided for axial movement within the valve body. An axially directed groove or more preferably two diametrically opposite grooves (not illustrated) are formed in the valve body and/or respective complimentary shaped axially directed rib 31 is formed on the valve member. The rib slides in the groove thus preventing rotation of the valve member and serving to guide it axially.

The lower end of the valve member 3 is provided with a circumferential projection 33 whilst a circumferentially recess 35 is formed in the valve body. The projection 33 and recess 35 constitutes catch means which are engageable when the valve member is moved to its closed position so that the valve member is held in its closed position. The resilience of the materials ensures that the parts remain engaged, movements of the cap member in a direction to open the valve disengages the catch means.

The valve body is formed integrally with two axially spaced flange members surrounding an inlet pipe and these facilitate attachment of the valve assembly to any suitable container by either press-fit, adhesives or welding. The flanges provide automatic positioning of the valve into the container and support where the container is cardboard.

The complete valve assembly is preferably made from plastics. The type of plastic material will be chosen to suit the particular liquids which are to be handled.

The discharge end 15 of the valve can be extended if desired to accept an extension tube for remote feeding.

As an alternative to the valve face 7, the valve member 3 may carry an O-ring seal for co-operation with the bore of the valve body and/or the valve seat portion 11.

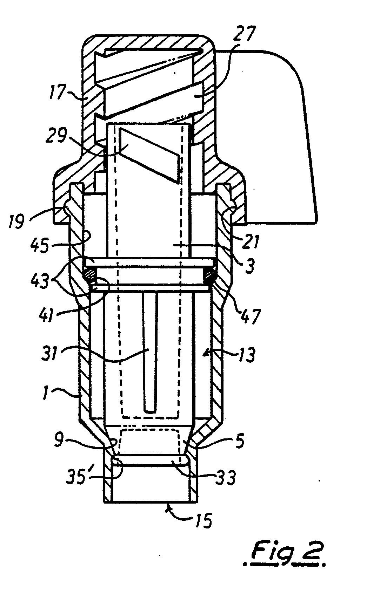

Referring now to the drawing of Figure 2, like reference numerals have been used to denote the corresponding parts to those in Figure 1. The valve assembly comprises a valve body 1 having received therein a valve member 3. The valve member 3 carries a valve face 5 which co-operates with a valve seat 9 in the valve body. The valve face and seat are frusto-conical in shape. The end of the valve member carries a circumferential rib 33 which is arranged to co-operate with a shoulder 35' when the valve is in the closed position.

The valve member 3 is actuated in the same manner as the embodiment of Figure 1 namely by rotation of a valve cap 17 which has formed therein an internal thread with which a projection 29 carried by the valve member co-operates. A corresponding axial guide arrangement is provided.

The valve face 7 of the Figure 1 embodiment is replaced with an O-ring seal 41 which is carried by the valve member. The O-ring seal 41 is located in a groove between two axially spaced flanges 43 formed on the valve member. The O-ring seal co-operates with the bore 45 in the valve body 1 to provide a seal at all times, and is preferably arranged to co-operate with a tapered portion 47 of the valve body when the valve member is in the closed position.

The arrangement provides still further improved sealing over the embodiment of Figure 1 and gives decreased oxygen permeability.

The O-ring 25 is dispensed with in the illustrated embodiment of Figure 2, but such an O-ring may be provided as an additional seal for back up purposes.

**Claims**

1. A valve assembly comprising a valve body having a respective inlet and outlet, a valve member (3) movable within the valve body (1) and co-operable with valve seat means for closing off the outlet, characterised in that catch means (33, 35) is operable between the valve body and valve member to locate the valve member in a position in which the outlet is closed off, and that guide means (31) is disposed between the valve body and valve member to guide the valve member for axial movement within the valve body.

2. A valve assembly as claimed in claim 1, in which the catch means comprises a circumferential recess (35) or shoulder (35') formed in one of the valve body and valve member, within which or with which a complimentary shaped circumferential rib (33), formed on the other of the valve body and valve member, co-operates in the closed position of the valve member.

3. A valve assembly as claimed in claim 2, in which the recess (35) or shoulder (35') is formed in the valve body and the rib (33) is formed on the valve member.

4. A valve assembly as claimed in claim 1, 2 or 3, in which the valve member carries a valve face (5) which is co-operable with a valve seat (9) of the valve body, and axially spaced therefrom an O-ring seal (47) which co-operates sealingly with a bore (45) in the valve body.

5. A valve assembly as claimed in claim 4, in which the valve body has a tapered portion 47 with which the O-ring seal co-operates when the valve member is in its closed position.

6. A valve assembly as claimed in claim 1, 2 or 3, in which the valve member carries axially spaced apart valve faces (5, 7) which co-operate with respective valve seats (9, 11) formed in the valve body.

7. A valve assembly as claimed in claim 4, 5 or 6, in which the inlet is located between the two valve seats and, in the closed position, both valves formed by the respective faces and seats are closed.

8. A valve assembly as claimed in claim 6 or 7, in which the two valves and seats are tapered and are complimentary in shape and the catch means is disposed downstream of the valve seat (9) controlling the flow to the outlet.

9. A valve assembly as claimed in any preceding claim in which the guide means comprises two diametrically opposite grooves formed in the valve body and aligned in the direction of the axis of the valve member and the valve member carries two axially directed ribs (31) which are received in a respective one of the grooves.

10. A valve assembly as claimed in any preceding claim further comprising a cap member (17) with helical thread means (27) between the cap member and valve member to convert rotary movement of the cap member to axial movement of the valve member.

11. A valve assembly as claimed in claim 10, in which the cap member (17) is located axially with respect to the valve body by a mutually engageable ring (19) and recess (21) carried on the respective members.

12. A valve assembly as claimed in any of claims 10 or 11, in which an O-ring seal (25) is disposed between the valve body and the cap member.

**Patentansprüche**

1. Ventileinheit mit einem Ventilkörper, welcher einen Eingang und einen Ausgang, ein innerhalb des Ventilkörpers (1) bewegliches und zum Abschließen des Ausganges mit Ventilsitzanordnungen zusammenwirkendes Ventilglied (3) besitzt, dadurch gekennzeichnet, daß eine Fangeinrichtung (33, 35) wirksam ist, um das Ventilglied in einer Stellung, in welcher der Ausgang verschlossen ist, zu positionieren und daß Führungseinrichtungen (31) zwischen dem Ventilkörper und dem Ventilglied angebracht sind, um das Ventilglied im Sinne einer axialen Bewegung innerhalb des Ventilkörpers zu führen.

2. Ventileinheit nach Anspruch 1, dadurch gekennzeichnet, daß die Fangeinrichtung eine ringsum laufende Vertiefung (35) oder Schulter (35') aufweist, welche im einen der Teile, Ventilkörper oder Ventilglied, angeordnet ist, innerhalb welcher oder im Verein mit welcher zusammen eine komplementär geformte ringsum laufende Rippe (33), welche an dem anderen der beiden Teile, Ventilkörper und Ventilglied, geformt ist, in der Schließstellung des Ventilgliedes, wirkt.

3. Ventileinheit nach Anspruch 2, dadurch gekennzeichnet, daß die Vertiefung (35) oder die Schulter (35') im Ventilkörper und die Rippe (33) am Ventilglied geformt ist.

4. Ventileinheit nach Anspruch 1, 2 oder 3, dadurch gekennzeichnet, daß das Ventilglied eine Ventilfläche (5) aufweist, welche mit einem Ventilsitz (9) des Ventilkörpers zusammenwirkt, und mit axialem Abstand hievon eine O-Ring-Dichtung (47) aufweist, welche dichtend mit einer Bohrung (45) im Ventilkörper zusammenarbeitet.

5. Ventileinheit nach Anspruch 4, dadurch gekennzeichnet, daß der Ventilkörper einen konischen Teil (47) aufweist, mit welchem die O-Ring-Dichtung zusammenwirkt, wenn sich das Ventilglied im geschlossenen Zustand befindet.

6. Ventileinheit nach Anspruch 1, 2 oder 3, dadurch gekennzeichnet, daß das Ventilglied in axialem Abstand stehende Ventilflächen (5, 7) trägt, welche mit entsprechenden Ventilsitzen (9, 11), die am Ventilkörper geformt sind, zusammenwirken.

7. Ventileinheit nach Anspruch 4, 5 oder 6, dadurch gekennzeichnet, daß der Eingang zwischen den zwei Ventilsitzen angeordnet ist und im geschlossenen Zustand beider Ventile, die von den entsprechenden Flächen und Sitzen geformt sind, geschlossen sind.

8. Ventileinheit nach Anspruch 6 oder 7, dadurch gekennzeichnet, daß die zwei Ventile und Sitze konisch und komplementär geformt sind und die Fangeinrichtung stromabwärts vom Ventilsitz (9), welcher die Strömung zum Ausgang steuert, angeordnet ist.

9. Ventileinheit nach einem der vorangehenden Ansprüche, dadurch gekennzeichnet, daß die Führungseinrichtung zwei diametral gegenüberliegende Nuten aufweist, die im Ventilkörper geformt und in Richtung der Achse des Ventilgliedes ausgerichtet sind, und das Ventilglied zwei axial gerichtete Rippen (31) aufweist, welche je in einer der Nuten aufgenommen sind.

10. Ventileinheit nach einem der vorangehenden Ansprüche, gekennzeichnet durch ein Kappenglied (17) mit schraubenförmigen Führungseinrichtungen (27) zwischen dem Kappenglied und dem Ventilglied, um eine Drehbewegung des Kappengliedes in eine axiale Bewegung des Ventilgliedes umzuwandeln.

11. Ventileinheit nach Anspruch 10, dadurch gekennzeichnet, daß das Kappenglied (17) in axialer Richtung gegenüber dem Ventilkörper durch einen Ring (19) und eine Vertiefung (21), die gegenseitig eingreifend an den betreffenden Gliedern angebracht sind, festgelegt ist.

12. Ventileinheit nach einem der Ansprüche 10 oder 11, dadurch gekennzeichnet, daß eine O-Ring-Dichtung (25) zwischen dem Ventilkörper und dem Kappenglied angeordnet ist.

**Revendications**

1. Ensemble constituant un robinet comprenant un corps de robinet qui présente une entrée et une sortie, un élément obturateur (3) mobile dans le corps (1) du robinet et pouvant coopérer avec des moyens formant sièges de soupapes pour fermer la sortie, caractérisé en ce que des moyens de retenue (33, 35) peuvent être mis en oeuvre entre le corps du robinet et l'élément obturateur pour fixer l'élément obturateur dans une position dans laquelle la sortie est fermée et en ce que des moyens de guidage (31) sont disposés entre le corps du robinet et l'élément obturateur pour guider l'élément obturateur dans son déplacement axial à l'intérieur du corps du robinet.

2. Ensemble robinet selon la revendication 1, dans lequel les moyens de retenue comprennent un évidement circonférentiel (35) ou un épaulement circonférentiel (35') formé dans l'un des deux éléments constitués par le corps du robinet et par l'élément obturateur, dans lequel ou avec lequel une nervure circonférentielle (33) de forme complémentaire, formée dans l'autre des deux éléments constitués par le corps du robinet et l'élément obturateur, coopère dans la position fermée de l'élément obturateur.

3. Ensemble robinet selon la revendication 2, dans lequel l'évidement (35) ou l'épaulement (35') est formé dans le corps du robinet et la nervure (33) est formée sur l'élément obturateur.

4. Ensemble.robinet selon l'une des revendications 1, 2 et 3, dans lequel l'élément obturateur porte une surface d'obturation (5) qui peut coopérer avec un siège de soupape (9) du corps du robinet et, dans une position espacée axialement de cette face, un joint d'étanchéité torique (47) formé par une bague torique et qui coopère avec un alésage (45) du corps du robinet pour établir un joint étanche.

5. Ensemble robinet selon la revendication 4, dans lequel le corps du robinet présente une partie (47) à section décroissante, avec laquelle un joint d'étanchéité torique coopère lorsque l'élément obturateur est dans sa position fermée.

6. Ensemble robinet selon l'une des revendications 1, 2 et 3, dans lequel l'élément obturateur porte des surfaces d'obturation (5, 7) espacées axialement, qui coopèrent avec des sièges de soupapes correspondants (9, 11) formés dans le corps du robinet.

7. Ensemble robinet selon l'une des revendications 4, 5 et 6, dans lequel l'entrée est située entre les deux sièges de soupapes et en ce que, dans la position fermée, les deux soupapes formées par les surfaces et sièges respectifs sont fermées.

8. Ensemble robinet selon l'une des revendications 6 et 7, dans lequel les deux faces et sièges de soupapes sont à section décroissante et de forme complémentaire et où les moyens de retenue sont disposés en aval du siège de soupape (9) qui commande l'écoulement vers la sortie.

9. Ensemble robinet selon l'une quelconque des revendications précédentes, dans lequel les moyens de guidage comprennent deux rainures diamétralement opposées formées dans le corps du robinet et alignées dans la direction de l'axe de l'élément obturateur, tandis que l'élément obturateur porte deux nervures (31) orientées axialement, qui se logent chacune dans une rainure respective.

10. Ensemble robinet selon l'une quelconque des revendications précédentes, et comprenant en outre un élément chapeau (17), et des moyens (27) formant filets hélicoïdaux, entre l'élément chapeau et l'élément obturateur, pour transformer le mouvement de rotation de l'élément chapeau en un mouvement axial de l'élément obturateur.

11. Ensemble robinet selon la revendication 10, dans lequel l'élément chapeau (17) est fixé en position axiale par rapport au corps du robinet par un anneau (19) et un évidement (21) pouvant être mis en prise entre eux et qui sont portés respectivement par les deux éléments.

12. Ensemble robinet selon l'une quelconque des revendications 10 et 11, dans lequel un joint torique d'étanchéité (25) est interposé entre le corps du robinet et l'élément chapeau.

_Fig_1_

*Fig 2.*